# EUROPEAN PATENT SPECIFICATION

(11) **EP 3 978 944 B1**
(45) Date of publication and mention of the grant of the patent: **25.06.2025**
(21) Application number: 20199580.0
(22) Date of filing: 01.10.2020
(51) Int. Cl.: G01S 5/00, G06Q 10/08, H04W 4/029

(54) **A POSITIONING AND IN-USE TRACKING SYSTEM**
SYSTEM ZUR POSITIONIERUNG UND NACHFÜHRUNG WÄHREND DER VERWENDUNG
SYSTÈME DE POSITIONNEMENT ET DE SUIVI EN COURS D'UTILISATION

(43) Date of publication of application: 06.04.2022
(73) Proprietor: Polytech A/S, 6740 Bramming (DK)
(72) Inventor: BØRSTING, Kristian, 6740 Bramming (DK)
(74) Representative: Zacco Denmark A/S

(56) References cited:
- WO-A1-2021/250011
- US-A1- 2018 041 895
- US-A1- 2020 051 015
- US-A1- 2020 092 683
- US-A1- 2020 279 446

## Description

The present invention relates to a positioning and in-use tracking system to be mounted on a mobile item or an installation or facility, comprising a detector device having an identification, a positioning unit, a communication unit configured to communicate data and a power supply unit, a storage device configured to store data communicated from the detector device regarding position of the detector device, the stored data from the detector device being accessible via a user interface, and a control unit. Such a tracking system is known for example from US2020/279446A1.

Manufactures of wind turbines and other manufactures of heavy equipment are transporting elements and goods to locations worldwide. When transporting heavy elements and components such as for instance towers, blades and nacelles, expensive and special carriers and other transport equipment are needed for protecting the elements and components during the transportation. When the elements and components are then installed on site, the carriers are left at the location, and the manufactures do not always have the overview of future transportation needs, and thereby ship the carriers to these positions. As a result, the carriers are left, forgotten, and eventually discarded.

The consequence may be that new expensive special carriers have to be ordered and produced to new transportation sites. This is very costly, and not environmentally friendly.

It is an object of the present invention to wholly or partly overcome the above disadvantages and drawbacks of the prior art. More specifically, it is an object to provide an improved positioning and in-use tracking system being able of tracking both position and status in an expedient manner.

The above objects, together with numerous other objects, advantages and features, which will become evident from the below description, are accomplished by a solution in accordance with the present invention by a positioning and in-use tracking system to be mounted on a mobile item or an installation or facility according to claim 1.

By applying the present invention a positioning and in-use tracking system is obtained wherein the use of for instance the mobile item may be optimized, meaning that the specific mobile item may be tracked so that it may be returned to reuse and thereby a higher coefficient of utilization for the specific mobile items obtainable. The investment in new equipment may also be minimized accordingly by the application of the positioning and in-use tracking system according to the present invention.

Furthermore, the one or more sensors may be an ultrasonic sensor, a Time of Flight sensor, an infrared sensor, a proximity sensor, a magnetometer sensor, a load cell sensor, a strain gauge, a radar sensor, or a combination thereof.

Also, a temperature sensor may be arranged in detector device.

The radar sensor may be a pulsed coherent radar or a Frequency-Modulated Continuous Wave sensor, or a combination thereof.

Moreover, the radar sensor may comprise a transmitter being configured to sending radar pulses and a receiver being configured receiving echoes.

Furthermore, the radar sensor may be configured to shut down the transmitter between radar pulses achieving lower power consumption.

The distance may be calculated by measuring a time from when the radar pulse is sent to when the radar echo is received.

Additionally, the radar sensor may be configured to only consume power while sending the radar pulse and when receiving the echo.

Also, a lens may be arranged in connection with the radar sensor, the lens is configured to control a direction of the radar pulses.

In addition, the communication unit may be configured to communicate data comprising the identification of the detector device, position of the detector device, a power level of the power supply and the distance and/or the load of the one or more sensor(s) at predetermined intervals.

Moreover, the control unit may be configured to process the data received from the detector device.

Additionally, the control unit may be configured to communicate data to the detector device.

Furthermore, the control unit on basis of the data from detector device may be configured to identify a status and the position of the detector device.

The positioning and in-use tracking system determines if the mobile item or installation is in use on basis of the detected distance and/or load.

The control unit may also be configured to detect material of the object based on the measurements of the radar sensor. Hereby is obtained that the control unit when measuring the distance to the object can detect which material the object is and also whether the detector device is partially covered with debris, leaves, snow, etc., so that it is ensured that it is the intended distances which is being measured.

In addition, the control unit may be configured to determine on basis of the detected distance one of the following situations:
- the one or more sensors are covered,
- the mobile item or installation is in use,
- the mobile item or installation is in a stacked position,
- the mobile item or installation is not in use.

The sensor may be configured to detect the distance up to at least 100 cm with an accuracy of 5 cm or lower.

Moreover, the mobile item may be transport equipment. The transport equipment may be a carrier, cradle, jig, support part, each being configured to support a transportable element during transport and/or during storage.

In an embodiment, the transportable element may be a wind turbine component, such as a tower part, a blade part, a nacelle part, a gear box or similar components.

In another embodiment, the installation or facility may be car park or a harbour.

Furthermore, the distance may be detected from the sensor of the detector device to a face of the object.

In addition, the detector device is arranged so that the object is positioned on, above or in front of the detector device.

Also, the detector device and the control unit may be operatively connected.

Moreover, the positioning unit may be based on GNSS signals. Additionally, the position may be determined by local identification of mobile telephone network positions or by internet network positions.

Additionally, the communication unit may be configured to communicate with a low power, long range (LR), wireless wide area network (LPWAN), such as NB-IoT, Sigfox, LoRa, ZigBee, Z-Wave, Wireless M-bus, Bluetooth, GPRS, GSM, 3G, 4G, 5G, nG, NFC, or similar wireless technology.

Also, the communication unit may be configured to communicate via fully or partly a wireless mesh network (WMN).

Furthermore, the communication unit comprises an operator driven gateway and/or an open source driven gateway.

The communication unit may also be configured to function as a local gateway so that the communication unit may be set up to communicate even in remote areas.

Also, the communication unit may be configured to receive and transmit data.

Furthermore, the identification may be a unique number or tag for the specific detector device so that this can be identified in the user interface.

The detector device may also comprise a RFID tag or label enabling that the detector device may be locally be identified by RFID reader or by visual inspection.

Moreover, the detector device comprises a casing, the casing may be watertight. The casing may be made of polyurethane (PUR), TBU or ABS material or a combination thereof.

In addition, the detector device may be operable in temperatures from -40 degrees to 60 degrees Celsius.

Also, the power supply unit may be a battery pack.

Furthermore, the detector device may be configured to receive data wireless from one or more secondary sensors. The secondary sensors may for instance communicate by Bluetooth and/or other long range (LR) communication technologies such as LoRA networks.

The secondary sensor(s) may be humidity sensor, acceleration sensor, gas sensor, temperature sensor, vibration sensor, UV sensor, strain gauge, or a combination thereof.

The sensors may be configured to provide data regarding which impacts and/or loads the items and/or facilities have been exerted for in addition to where and when these impacts and/or loads have occurred.

For instance, the vibration sensor may provide data on the impacts exerted on the items. By this data it is possible to redesign the items and/or equipment in view of strength and thereby reduce the material used for the item or equipment. In addition, when the operator can document the impacts and/or loads exerted it may be used to classification companies and/or insurance companies for inter alia having a lower insurance premium.

The accelaration sensor may provide data regarding the speed and other related loads by which the item and/or transport equipment have been exerted for.

In addition, the humidity sensor may provide data regarding when and where the humidity increase and/or decrease. This data may be used to optimise the item and thereby ensuring that the humidity does not inflect on the items.

The UV sensor may detect the level of UV the items and/or equipment have been exerted for. Hereby it is possible to monitor when different parts of the items should be replaced for ensuring proper function.

Moreover, the strain gauges may provide data regarding the loads exerted on the items. For instance, by measuring loads by use of strain guages positioned at diffeernet position on for instance a prototype of the item, it is possible to get data of which parts and areas of the items which are exerted for different loads, whereby the items may be dimensioned and designed to withstand these loads in an optimum manner.

The detector device may be configured to go into an idle mode for a predetermined time when the communication unit is unable to communicate.

The present invention also relates to a method for identifying a position and status of a mobile item or an installation or facility in a positioning and in-use tracking system as described above, comprising
- detecting a position of a detector device having an identification,
- detecting a distance to and/or a load of an object in relation to the mobile item or installation,
- communicating identification, position and distance and/or load to a storage device at predetermined intervals,
- storing data regarding identification, position and distance and/or load,
- determining on basis of data the position of the detector device and if the mobile item or installation is in use.

Furthermore, the method may comprise making the data available by means of a user interface so that a mobile item, an installation or a facility may be tracked in real-time or at the predetermined time intervals via the detector device.

Additionally, the method may comprise determining on basis of the detected distance one of the following situations:
- the one or more sensors are covered,
- the mobile item or installation is in use,
- the mobile item or installation is in a stacked position,
- the mobile item or installation is not in use.

The present invention also relates to a use of the positioning and in-use tracking system as described above for determining a position and a status of transport equipment.

The invention and its many advantages will be described in more detail below with reference to the accompanying schematic drawings, which for the purpose of illustration show some non-limiting embodiments and in which
Fig. 1 shows a positioning and in-use tracking system according to the invention,
Fig. 2 shows a first embodiment of a detector device,
Figs. 3 and 4 show different embodiments for detecting a distance,
Fig. 5 shows a second embodiment of a detector device,
Fig. 6 shows a third embodiment of a detector device,
Fig. 7 shows another positioning and in-use tracking system,
Fig. 8 shows yet another positioning and in-use tracking system, and
Figs. 9a-9c show different situations of detection.

All the figures are highly schematic and not necessarily to scale, and they show only those parts which are necessary in order to elucidate the invention, other parts being omitted or merely suggested.

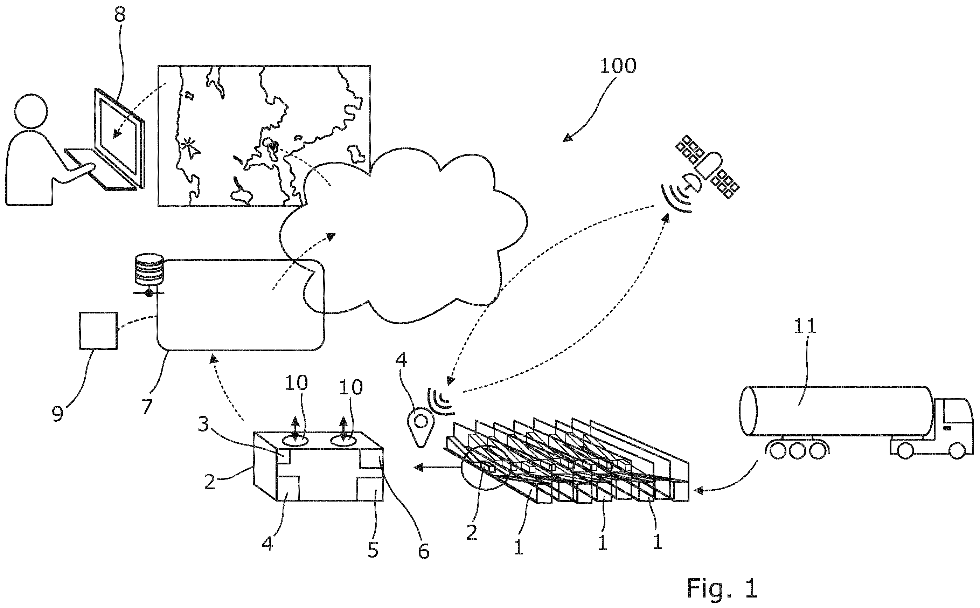

Fig. 1 shows a positioning and in-use tracking system 100 according to the invention. The positioning and in-use tracking system 100 is in Fig. 1 mounted on a mobile item 1. The positioning and in-use tracking system 100 comprises a detector device 2 being mounted on the mobile item 1 and is a well shown in an enlarged view. The detector device 2 has an identification 3 so that the detector device 2 may be proper identified. The detector device 2 furthermore has a positioning unit 4, a communication unit 5 configured to communicate data and a power supply unit 6.

The positioning and in-use tracking system 100 also comprises a storage device 7 configured to store data communicated from the detector device 2 regarding position of the detector device 2, the stored data from the detector device 2 being accessible via a user interface 8, and a control unit 9. The control unit 9 may be part of the storage device 7. The storage device 7, the control unit 9 and the user interface 8 are operatively connected.

Furthermore, the detector device 2 comprises one or more sensor(s) 10 configured to detect a distance to and/or a load of an object 11. In the present embodiment two sensors 10 are arranged in the detector device 2 for detecting a distance, which will further be described below.

In addition, the one or more sensor(s) 10 is/are configured to detect the distance and/or load at predetermined time intervals, and the detected distance and/or load is communicated to the storage device 7 via the communication unit 5.

By the system 100 according to the invention it is possible to track and determine the position of the detector device 2 and at the same time detect the status of the mobile unit or installation to which it is connected. The status could be in use or not in use. This is especially relevant in circumstances where the system 100 according to the invention is implemented within the logistic and transport sector whereby the operators will be able to track the position of the transport equipment and at the same time track whether the transport equipment in fact is in use or not. In Fig. 1 the mobile items 1 may be transport equipment 1 used in connection with transport of wind turbine equipment, such as a tower part 11, i.e. the object 11. Furthermore, due to statutory requirement in many countries it is important for the owners of the transport equipment to be able to document the positions of the transport equipment in view of tax issues.

By applying the present invention a system is obtained wherein the use of the transport equipment may be optimized, meaning that the specific transport equipment may be tracked so that it may be returned to reuse and thereby a higher coefficient of utilization for the specific transport equipment is obtainable. The investment in new equipment may also be minimized accordingly.

Furthermore, the storage device may be configured to log the data so that the historic data of a specific detector device may be accessible and can be analysed.

According to the invention the detector device 2 has a positioning unit for providing a position of the detector device 2 in combination with one or more sensors 10. Different sensors may be arranged in the detector device according to the purpose and circumstances.

The sensors may be an ultrasonic sensor, a Time of Flight sensor, an infrared sensor, a proximity sensor, a magnetometer sensor, a load cell sensor, a strain gauge, a radar sensor, or a combination thereof.

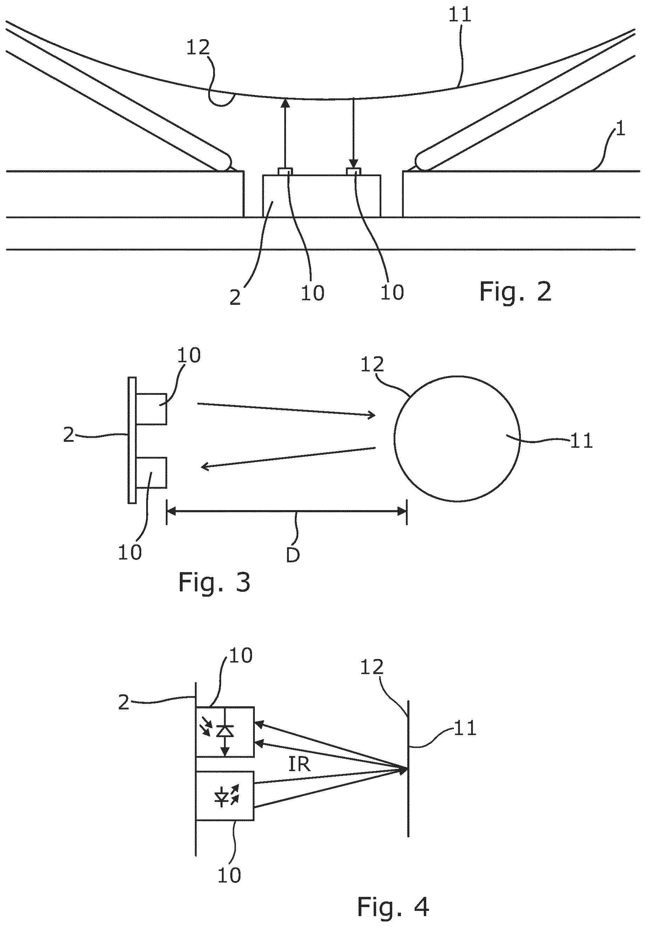

In Fig. 2 a first embodiment of a detector device 2 is shown schematically. The detector device 2 comprises 2 sensors being ultrasonic sensors 10. The ultrasonic sensors 10 are using ultrasonic sound for detecting a distance to an object 11. Basically, the ultrasonic sensor is transmitting an ultrasonic sound towards the object 11 being positioned opposite the ultrasonic sensor 10. This ultrasonic sound is reflected by a face 12 of the object and returned and received by a microphone. At the same time the ultrasonic sensor 10 has detected how long time has elapsed and on basis of the time span the ultrasonic sensor 10 may provide a distance from the ultrasonic sensor 10 to the face 12 of the object 11. This is also illustrated in Fig. 3 wherein the distance D is shown.

In the present embodiment shown in Figs. 2 and 3 the detector device 2 detects the distance D between the sensors 10 and the face 12 of the object 11 facing the sensors 10. This detection of a specific distance is communicated with the data of the identification and the position of the detector device 2 to the storage device. This data is then processed by the control unit which can determine on basis of the distance that the mobile item 1 is in use and has a specific position. This information is stored in the storage device and is accessible for the operator via the user interface.

Advantageously, the communication unit is configured to communicate data comprising the identification of the detector device, position of the detector device, a power level of the power supply and the distance and/or the load of the one or more sensor(s) at predetermined intervals. Depending on the application of the detector device 2 the predetermined intervals may be set to 4 hours, 12 hours, 24 hours, 36 hours or even longer for some applications. Indeed, other time intervals than the mentioned may be chosen in view of application and power supply.

Another example of a sensor may be a Time of Flight sensor. The time of Flight sensor function substantially in the same manner as the ultrasonic sensor as shown in Fig.3 in that it also detects a distance. However, it uses light instead of sound.

In Fig. 4 another embodiment of a sensor 10 is shown. This sensor is an infrared sensor or a proximity sensor and function substantially in the same manner as the Time of flight sensor mentioned above. The infrared sensor 10 are using infrared light which is emitted towards the face 12 of the object 11 and reflected by the face 12 and returned and received by the infrared sensor 10. At the same time the infrared sensor 10 has detected how long time has elapsed and on basis of the time span the infrared sensor 10 may provide a distance from the infrared sensor 10 to the face 12 of the object 11.

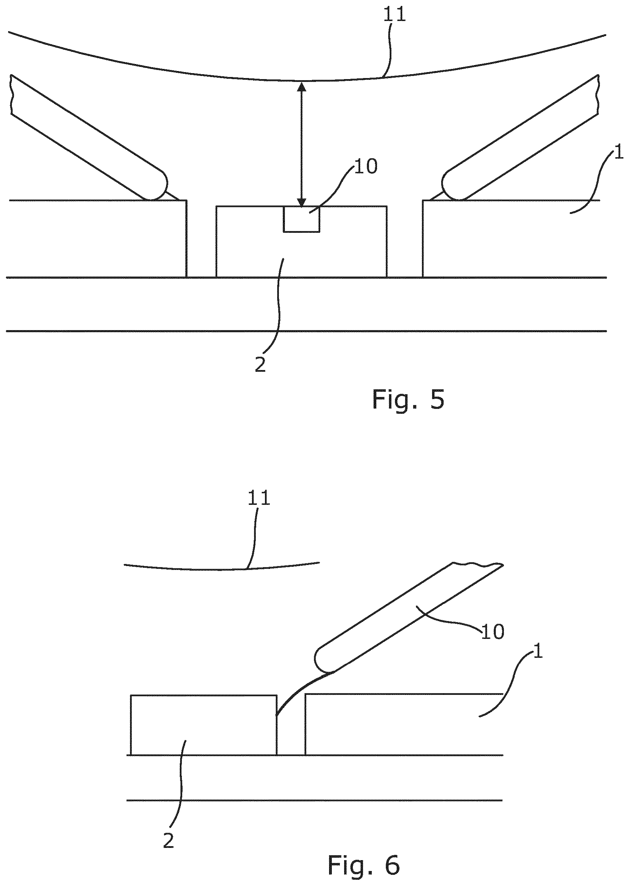

In Fig. 5 another embodiment of the detector device 2 is shown. In the present embodiment the detector device is mounted on a mobile item 1. The detector device 2 comprises a magnetometer sensor 10. The magnetometer sensor 10 is configured to detect and measure magnetism in different directions. Hence when a magnetic object is arranged in the mobile item 1 the magnetometer sensor 10 detects the presence and communicate this detection to the storage device.

In Fig. 6 yet another embodiment of the detector device 2 is shown. In this embodiment the sensor 10 is a strain gauge or a load cell sensor. The strain gauge or load cell sensor is configured to detect the load of the object 11 and on basis of this load data is communicated to the storage device. This data is then processed by the control unit which can determine on basis of the load that the mobile item 1 is in use or not and has a specific position. This information is stored in the storage device and is accessible for the operator via the user interface.

According to the invention the detector device 2 may comprise two or more sensors for providing redundancy to the detector device 2. Furthermore, a combination of sensors may be used, for instance an ultrasonic sensor together with a strain gauge may be comprised in the detector device in which embodiment both distance and load may be detected.

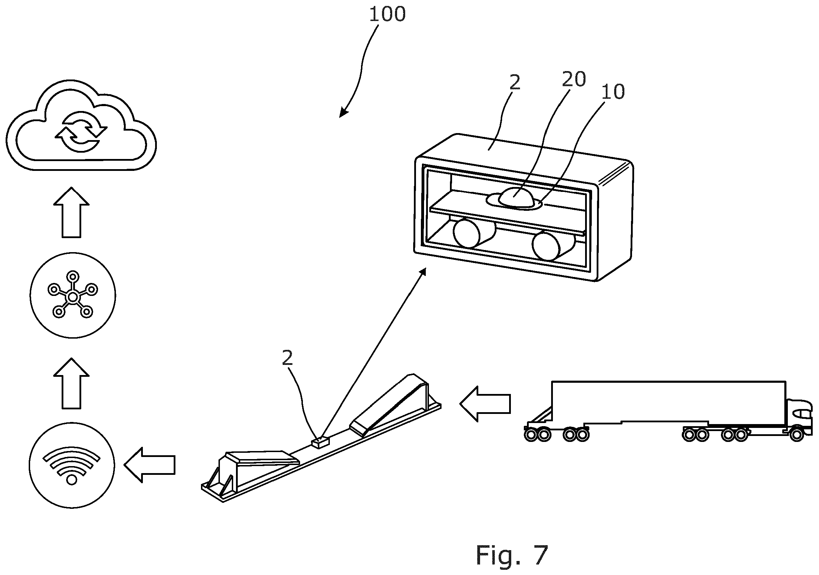

In Fig. 7 another embodiment of the positioning and in-use tracking system 100 according to the invention is shown. The embodiment is substantially designed as described in connection with Fig. 1, however the detector device 2 comprises in present embodiment a radar sensor 10. The radar sensor 10 may be a pulsed coherent radar or a Frequency-Modulated Continuous Wave sensor, or a combination thereof. The detector device 2 is in Fig. 7 partly uncovered so that the interior of the detector device 2 is visible. During normal use the detector device is closed.

The radar sensor 10 may be a low power, high precision, pulsed short-range radar sensor. The radar sensor may be embedded with radio and antenna.

The radar sensor 10 may comprise a transmitter (not shown) being configured to sending radar pulses and a receiver (not shown) being configured receiving echoes. For minimising the power consumption, the radar sensor 10 may be configured to shut down the transmitter between radar pulses. Hence, the radar sensor 10 may be configured to only consume power while sending the radar pulse and when receiving the echo.

The distance to the object is calculated by measuring a time from when the radar pulse is sent to when the radar echo is received.

Furthermore, a lens 20 is arranged in connection with the radar sensor 10, the lens 20 is configured to control a direction of the radar pulses so that it is determined which direction a distance is to be detected.

In addition, by incorporating the radar sensor 10 in the detector device 2, no aperture or openings for the sensor in the detector device is necessary. Hence, the casing of the detector device may be watertight. Also, the robustness of the detector device may be enhanced since the radar sensor 10 is operatively by radio band and may function without interference from sound, noise, dust, colour nor direct or indirect light.

The radar sensor 10 may also be configured to detect materials, for instance by detecting materials with different dielectric constants.

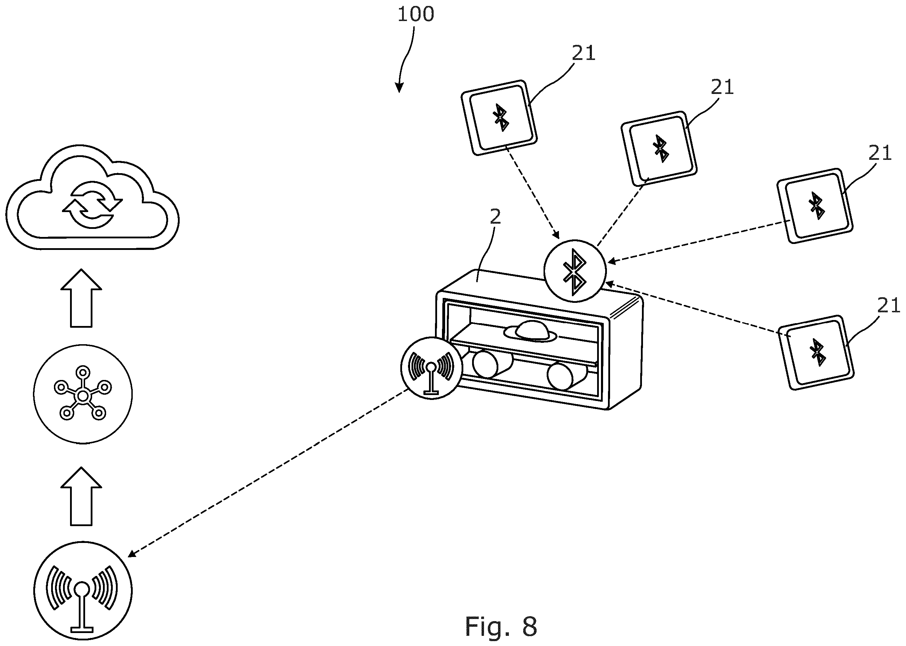

In Fig. 8 another embodiment the positioning and in-use tracking system 100 according to the invention is shown. The system 100 has the same components as previously described. In the present embodiment the detector device 2 is connected with a plurality of secondary sensors 21. The secondary sensors 21 may be humidity sensor, acceleration sensor, gas sensor, temperature sensor, UV sensor, or a combination thereof. The secondary sensors 21 may be arranged in the vicinity of the detector device 2 for sensing or detecting different properties or environmental data and communicating it to the detector device 2, for instance by a Bluetooth connection or other long range communication technologies such for instance a LoRa network. In the present embodiment the detector device 2 communicate the additional data from the secondary sensors 21 to the storage device. This data is then processed by the control the information is stored in the storage device and is accessible for the operator via the user interface.

Furthermore, the detector device 2 may also comprise a temperature sensor. The temperature sensor may detect or measure the temperature of the detector device 2 itself and/or the surroundings. These temperatures may be communicated to the storage device with the other data.

The detector device 2 may be operable in temperatures from -40 degrees to 60 degrees Celsius.

Furthermore, the detector device is watertight whereby it is protected from the environment and its climate and humidity. Advantageously, the detector device is maintenance free. Also, the detector device may be made of a polyurethane (PUR) TBU or ABS material or a combination thereof.

As mentioned above, the detector device and the control unit are operatively connected meaning that the data communicated from the detector device to the storage device may be processed by the control unit. Mostly the detector device transmit data to the storage device and thereby the control unit, however, in some circumstances the control unit may be configured to communicate data to the detector device for instance when updating settings, etc.

The positioning unit may be a Global Navigation Satellite System (GNSS). The positioning unit may also be based on Global Position System (GPS), the positioning unit may determine the position by local identification of mobile telephone network positions, or by internet network position or by a combination thereof.

Furthermore, the communication unit may be configured to communicate with a low power, long range (LR), wireless wide area network (LPWAN), such as NB-IoT, Sigfox, LoRa, ZigBee, Z-Wave, Wireless M-bus, Bluetooth, GPRS, GSM, 3G, 4G, 5G, nG, NFC, or similar wireless technology.

Moreover, the communication unit may be configured to communicate via fully or partly a wireless mesh network (WMN).

According to the claimed invention, the communication unit comprises an operator driven gateway and/or an open source driven gateway.

Also, the communication unit is configured to function as a local gateway.

The identification is a unique number or tag for the specific detector device so that this can be identified in the user interface. The identification may also include information about the mobile item or installation to which they are mounted so that these are connected and accessible in the user interface.

The detector device may also have a RFID tag or a label enabling nearby identification. A barcode or similar tag may be arranged on the outside of the detector device for ensuring proper identification.

Advantageously, the power supply unit may be a battery pack being incorporated in the detector device itself. The battery pack is preferably able to keep the detector device running for approximately 7 years and preferable more.

In this regard, the detector device may be configured to go into an idle mode for a predetermined time when the communication unit is unable to communicate. In this circumstance the battery life is conserved.

The user interface may comprise an overview part and a widget part, outputs an operation status and position of the previously registered detector devices. The control unit is configured to ensure that the data in the storage device may be accessible from the user interface in a predetermined manner so that the operation status, position, power supply level of the previously registered detector devices can be identified.

Preferably, the user interface will be accessible through the internet so that the data received from detector devices may be accessible from any remote location.

Furthermore, the user interface may comprise a visual map, preferably worldwide, thereby providing an overview over the data of the detector devices connected with the system. Icons may be provided on the map for symbolizing the location/position of the detector devices. Together with the position information regarding the mobile item or installation is free, in use, etc. is provided.

Other functions may be provided in the user interface, for instance the option of reserving a mobile item or installation in a specific time slot. In addition, historic data of specific detector device may be analysed for providing insight of the condition of the mobile item or installation over time.

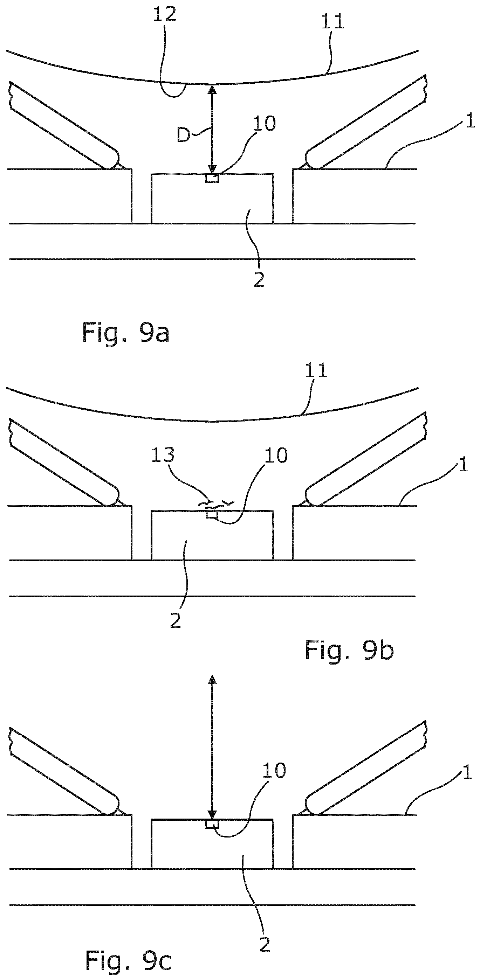

In Figs. 9a-9c different situations of detection are shown. In the shown embodiments the sensors arranged in the detector device 2 are ultrasonic sensors 10 detecting the distance to an object 11. In Fig. 9a, the ultrasonic sensor 10 is transmitting an ultrasonic sound towards the object 11 being positioned opposite the ultrasonic sensor 10. This ultrasonic sound is reflected by the face 12 of the object and returned and received by a microphone. At the same time the ultrasonic sensor 10 has detected how long time has elapsed and on basis of the time span the ultrasonic sensor 10 may provide the distance D from the ultrasonic sensor 10 to the face 12 of the object 11. In Fig. 9b, the ultrasonic sensor 10 is covered by dirt, leaves 13, snow or similar and thereby the ultrasonic sound is blocked or at least detects a little distance. Hence, the detector device 2 is not able to detect the distance to the object 10. In Fig. 9c, the object is not present in the mobile item 1. The ultrasonic sensor 10 transmits the ultrasonic sound however it is not reflected by the object or detects a large distance.

Hence, the control unit is configured to determine on basis of the detected distance one of the following situations:
- the one or more sensors are covered as seen in Fig. 9b,
- the mobile item or installation is in use as seen in Fig. 9a,
- the mobile item or installation is in a stacked position (not shown),
- the mobile item or installation is not in use as seen in Fig. 9c.

These statuses/information are then accessible for the operator in the user interface.

Depending on the application the sensor may be configured to detect a distance up to at least 100 cm with an accuracy of approximately 5 cm or lower.

Furthermore, the mobile item may be transport equipment. The transport equipment may be a carrier, cradle, jig, support part, each being configured to support a transportable element during transport and/or during storage. The transport equipment may be used to transport elements/objects from one site to another, or within the same site.

In one embodiment the transportable element is a wind turbine component, such as a tower part, a blade part, a nacelle part, a gear box or similar components. The wind industry is transporting many heavy elements and the transport equipment used for this transport is rather expensive. By mounting a detector device of the positioning and in-use tracking system according to the present invention on each transport equipment it is possible for the operator to monitor the position and the status of each transport equipment. This may be performed at predetermined time intervals or continuously. Hereby the operators are able to collect the free transport equipment for new transport assignments whereby the wind industry may save time and especially costs in regard to providing new transport equipment.

The detector device may be configured to be mounted directly on the transport equipment. The detector device may also be embedded in for instance a transportation mat or similar support parts.

Furthermore, one or more secondary sensor(s) may also be mounted to or embedded in a transportation mat or similar support parts. In one embodiment an UV sensor is mounted to or embedded in a transportation mat so that it may be monitored how much light (UV) the transportation mat has been exerted for and thereby it may be decided when a specific transportation mat shall be replaced. In another embodiment, the detector devices may be mounted in relation to berths in a harbour whereby the operator in real time and online may detect whether a berth is free or in use.

Yet another embodiment the detector device may be mounted in relation to a car park whereby the operator in real time and online may detect whether a parking space is free or in use.

The detector device may also be arranged inside a container, a vessel, a tank or similar, for detecting whether the container or similar is filled with any substance, and to what degree, as well as position. For instance, if the detector device has a radar sensor a liquid and its volume inside the container may be measured.

The present invention also relates to a method for identifying a position and status of a mobile item or an installation or facility in a claimed positioning and in-use tracking system, comprising
- detecting a position of a detector device having an identification,
- detecting a distance to and/or a load of an object in relation to the mobile item or installation,
- communicating identification, position and distance and/or load to a storage device at predetermined intervals,
- storing data regarding identification, position and distance and/or load,
- determining on basis of data the position of the detector device and if the mobile item or installation is in use.

In addition, the method further comprises making the data available by means of a user interface so that a mobile item, an installation or a facility is tracked in real-time via the detector device.

Moreover, the method may also comprise determining on basis of the detected distance one of the following situations:
- the one or more sensors are covered,
- the mobile item or installation is in use,
- the mobile item or installation is in a stacked position,
- the mobile item or installation is not in use.

Although the invention has been described in the above in connection with preferred embodiments of the invention, it will be evident for a person skilled in the art that several modifications are conceivable without departing from the invention as defined by the following claims.

## Claims

1. A positioning and in-use tracking system (100) to be mounted on a mobile item or an installation or facility, (1) comprising
- a detector device (2) having an identification (3), a positioning unit (4), a communication unit (5) configured to communicate data, wherein the communication unit comprises an operator driven gateway and/or an open source driven gateway, a power supply unit (6),
- a storage device (7) configured to store data communicated from the detector device regarding position of the detector device, the stored data from the detector device being accessible via a user interface (8), and
- a control unit (9),
wherein the detector device further comprises
one or more sensor(s) (10) configured to detect a distance to and/or a load of an object,
the one or more sensor(s) is/are configured to detect the distance and/or load at predetermined time intervals, and
the detected distance and/or load is communicated to the storage device via the communication unit, and
wherein the positioning and in-use tracking system determines if the mobile item or installation is in use on basis of the detected distance and/or load.

2. A positioning and in-use tracking system according to claim 1, wherein the one or more sensors is/are an ultrasonic sensor, a Time of Flight sensor, an infrared sensor, a proximity sensor, a magnetometer sensor, a load cell sensor, a strain gauge, a radar sensor, or a combination thereof.

3. A positioning and in-use tracking system according to claim 2, wherein the radar sensor is a pulsed coherent radar or a Frequency-Modulated Continuous Wave sensor, or a combination thereof.

4. A positioning and in-use tracking system according to claim 2 and/or 3, wherein the radar sensor comprises a transmitter being configured to sending radar pulses and a receiver being configured receiving echoes.

5. A positioning and in-use tracking system according to claim 4, wherein the radar sensor is configured to shut down the transmitter between radar pulses achieving lower power consumption.

6. A positioning and in-use tracking system according to any of the preceding claims, wherein the communication unit is configured to communicate data comprising the identification of the detector device, position of the detector device, a power level of the power supply and the distance and/or the load of the one or more sensor(s) at predetermined intervals.

7. A positioning and in-use tracking system according to any of the preceding claims, wherein the control unit on basis of the data from detector device is configured to identify a status and the position of the detector device.

8. A positioning and in-use tracking system according to claim 7, wherein the control unit is configured to detect material of the object based on the measurements of the radar sensor.

9. A positioning and in-use tracking system according to any of the preceding claims wherein the positioning unit is a GNSS.

10. A positioning and in-use tracking system according to any of the preceding claims, wherein the communication unit is configured to communicate with a low power, long range (LR), wireless wide area network (LPWAN), such as NB-IoT, Sigfox, LoRa, ZigBee, Z-Wave, Wireless M-bus, Bluetooth, GPRS, GSM, 3G, 4G, 5G, nG, NFC, or similar wireless technology.

11. A positioning and in-use tracking system according to any of the preceding claims, wherein the identification is a unique number or tag for the specific detector device so that this can be identified in the user interface.

12. A positioning and in-use tracking system according to any of the preceding claims, wherein the power supply unit is a battery pack.

13. A method for identifying a position and status of a mobile item or an installation or facility in a positioning and in-use tracking system according to any of the preceding claims, comprising
- detecting a position of a detector device having an identification,
- detecting a distance to and/or a load of an object in relation to the mobile item or installation,
- communicating identification, position and distance and/or load to a storage device at predetermined intervals,
- storing data regarding identification, position and distance and/or load,
- determining on basis of data the position of the detector device and if the mobile item or installation is in use.

14. A method according to claim 13, further comprising making the data available by means of a user interface so that a mobile item, an installation or a facility is tracked in real-time via the detector device.

## Patentansprüche

1. System (100) zur Positionierung und Verfolgung während der Verwendung, das an einem beweglichen Gegenstand oder einer Anlage oder Einrichtung (1) anzubringen ist, umfassend
- ein Detektorgerät (2), das Folgendes aufweist: eine Identifikation (3), eine Positionierungseinheit (4), eine Kommunikationseinheit (5), die dazu konfiguriert ist, Daten zu kommunizieren, wobei die Kommunikationseinheit ein bedienergesteuertes Gateway und/oder ein Open-Sourcegesteuertes Gateway umfasst, eine Stromversorgungseinheit (6),
- ein Speichergerät (7), das dazu konfiguriert ist, Daten, die von dem Detektorgerät in Bezug auf die Position des Detektorgeräts kommuniziert werden, zu speichern, wobei die gespeicherten Daten von dem Detektorgerät über eine Benutzeroberfläche (8) zugänglich sind, und
- eine Steuereinheit (9),
wobei das Detektorgerät ferner Folgendes umfasst:
einen oder mehrere Sensoren (10), die dazu konfiguriert sind, eine Distanz zu und/oder eine Last von einem Objekt zu detektieren,
wobei der eine oder die mehreren Sensoren dazu konfiguriert ist/sind, die Distanz und/oder die Last bei vorbestimmten Zeitintervallen zu detektieren, und
die detektierte Distanz und/oder Last über die Kommunikationseinheit an das Speichergerät kommuniziert wird, und
wobei das System zur Positionierung und Verfolgung während der Verwendung bestimmt, ob der beweglichen Gegenstand oder die Anlage in Verwendung ist, basierend auf der detektierten Distanz und/oder Last.

2. System zur Positionierung und Verfolgung während der Verwendung nach Anspruch 1, wobei der eine oder die mehreren Sensoren eines der Folgenden ist/sind: ein Ultraschallsensor, ein Flugzeitsensor, ein Infrarotsensor, ein Näherungssensor, ein Magnetometersensor, ein Wägezellensensor, ein Dehnungsmessstreifen, ein Radarsensor oder eine Kombination davon.

3. System zur Positionierung und Verfolgung während der Verwendung nach Anspruch 2, wobei der Radarsensor ein gepulster kohärenter Radar- oder ein frequenzmodulierter Dauerstrichsensor oder eine Kombination davon ist.

4. System zur Positionierung und Verfolgung während der Verwendung nach Anspruch 2 und/oder 3, wobei der Radarsensor einen Sender, der dazu konfiguriert ist, Radarpulse zu senden, und einen Empfänger, der dazu konfiguriert ist, Echos zu empfangen, umfasst.

5. System zur Positionierung und Verfolgung während der Verwendung nach Anspruch 4, wobei der Radarsensor dazu konfiguriert ist, den Sender zwischen Radarpulsen abzuschalten, wodurch ein geringerer Stromverbrauch erzielt wird.

6. System zur Positionierung und Verfolgung während der Verwendung nach einem der vorhergehenden Ansprüche, wobei die Kommunikationseinheit dazu konfiguriert ist, Daten zu kommunizieren, die Folgendes umfassen: die Identifikation des Detektorgeräts, die Position des Detektorgeräts, eine Leistungsstufe der Stromversorgung und die Distanz und/oder die Last des einen oder der mehreren Sensoren bei vorbestimmten Intervallen.

7. System zur Positionierung und Verfolgung während der Verwendung nach einem der vorhergehenden Ansprüche, wobei die Steuereinheit auf Basis der Daten vom Detektorgerät dazu konfiguriert ist, einen Status und die Position des Detektorgeräts zu identifizieren.

8. System zur Positionierung und Verfolgung während der Verwendung nach Anspruch 7, wobei die Steuereinheit dazu konfiguriert ist, Material des Objekts basierend auf den Messungen des Radarsensors zu detektieren.

9. System zur Positionierung und Verfolgung während der Verwendung nach einem der vorhergehenden Ansprüche, wobei es sich bei der Positionierungseinheit um ein GNSS handelt.

10. System zur Positionierung und Verfolgung während der Verwendung nach einem der vorhergehenden Ansprüche, wobei die Kommunikationseinheit dazu konfiguriert ist, mit einem Wireless Wide Area Network mit niedrigem Stromverbrauch (LPWAN) und hoher Reichweite (LR) wie zum Beispiel NB-IoT, Sigfox, LoRa, ZigBee, Z-Wave, Wireless M-bus, Bluetooth, GPRS, GSM, 3G, 4G, 5G, nG, NFC oder einer ähnlichen drahtlosen Technologie zu kommunizieren.

11. System zur Positionierung und Verfolgung während der Verwendung nach einem der vorhergehenden Ansprüche, wobei es sich bei der Identifikation um eine eindeutige Nummer oder ein eindeutiges Tag für das spezifische Detektorgerät handelt, so dass diese(s) in der Benutzeroberfläche identifiziert werden kann.

12. System zur Positionierung und Verfolgung während der Verwendung nach einem der vorhergehenden Ansprüche, wobei es sich bei der Stromversorgungseinheit um einen Akku handelt.

13. Verfahren zum Identifizieren einer Position und eines Status eines beweglichen Gegenstands oder einer Anlage oder Einrichtung in einem System zur Positionierung und Verfolgung während der Verwendung nach einem der vorhergehenden Ansprüche, umfassend:
- Detektieren einer Position eines Detektorgeräts, das eine Identifikation aufweist,
- Detektieren einer Distanz zu und/oder einer Last von einem Objekt in Bezug auf den beweglichen Gegenstand oder die Anlage,
- Kommunizieren der Identifikation, Position und Distanz und/oder Last an ein Speichergerät bei vorbestimmten Intervallen,
- Speichern von Daten zur Identifikation, Position und Distanz und/oder Last,
- Bestimmen, auf Basis von Daten, der Position des Detektorgeräts, und ob der bewegliche Gegenstand oder die Anlage in Verwendung ist.

14. Verfahren nach Anspruch 13, ferner umfassend Zurverfügungstellen der Daten mithilfe einer Benutzeroberfläche, so dass ein beweglicher Gegenstand, eine Anlage oder eine Einrichtung in Echtzeit über das Detektorgerät verfolgt wird.

## Revendications

1. Système de positionnement et de suivi en cours d'utilisation (100), destiné à être monté sur un élément mobile ou une installation ou une facilité, (1) comprenant
- un dispositif de détection (2) comportant une identification (3), une unité de positionnement (4), une unité de communication (5) configurée pour communiquer des données, l'unité de communication comprenant une passerelle pilotée par un opérateur et/ou une passerelle pilotée par un logiciel libre, une unité d'alimentation (6),
- un dispositif de stockage (7) configuré pour stocker les données communiquées par le dispositif de détection concernant la position du dispositif de détection, les données stockées par le dispositif de détection étant accessibles via une interface utilisateur (8), et
- une unité de commande (9),
dans lequel le dispositif de détection comprend en outre un ou plusieurs capteurs (10) configurés pour détecter une distance et/ou une charge d'un objet,
les un ou plusieurs capteurs sont configurés pour détecter la distance et/ou la charge à des intervalles de temps prédéterminés, et
la distance et/ou la charge détectée est communiquée au dispositif de stockage via l'unité de communication, et
dans lequel le système de positionnement et de suivi en cours d'utilisation détermine si l'élément mobile ou l'installation est en cours d'utilisation sur la base de la distance et/ou de la charge détectée.

2. Système de positionnement et de suivi en cours d'utilisation selon la revendication 1, dans lequel les un ou plusieurs capteurs sont un capteur à ultrasons, un capteur de temps de vol, un capteur infrarouge, un capteur de proximité, un capteur magnétomètre, un capteur de cellule de charge, une jauge de contrainte, un capteur radar, ou une combinaison de ceux-ci.

3. Système de positionnement et de suivi en cours d'utilisation selon la revendication 2, dans lequel le capteur radar est un radar cohérent pulsé ou un capteur à onde continue modulée en fréquence, ou une combinaison de ceux-ci.

4. Système de positionnement et de suivi en cours d'utilisation selon la revendication 2 et/ou 3, dans lequel le capteur radar comprend un émetteur configuré pour envoyer des impulsions radar et un récepteur configuré pour recevoir des échos.

5. Système de positionnement et de suivi en cours d'utilisation selon la revendication 4, dans lequel le capteur radar est configuré pour arrêter l'émetteur entre les impulsions radar, permettant d'obtenir une consommation d'énergie plus faible.

6. Système de positionnement et de suivi en cours d'utilisation selon l'une quelconque des revendications précédentes, dans lequel l'unité de communication est configurée pour communiquer des données comprenant l'identification du dispositif de détection, la position du dispositif de détection, un niveau de puissance de l'alimentation électrique et la distance et/ou la charge des jauge de contrainte capteurs à des intervalles prédéterminés.

7. Système de positionnement et de suivi en cours d'utilisation selon l'une quelconque des revendications précédentes, dans lequel l'unité de commande, sur la base des données provenant du dispositif de détection, est configurée pour identifier un état et la position du dispositif de détection.

8. Système de positionnement et de suivi en cours d'utilisation selon la revendication 7, dans lequel l'unité de commande est configurée pour détecter le matériau de l'objet sur la base des mesures du capteur radar.

9. Système de positionnement et de suivi en cours d'utilisation selon l'une quelconque des revendications précédentes, dans lequel l'unité de positionnement est un GNSS.

10. Système de positionnement et de suivi en cours d'utilisation selon l'une quelconque des revendications précédentes, dans lequel l'unité de communication est configurée pour communiquer avec un réseau étendu sans fil (LPWAN) à faible consommation et longue portée (LR), tel que NB-IoT, Sigfox, LoRa, ZigBee, Z-Wave, M-bus sans fil, Bluetooth, GPRS, GSM, 3G, 4G, 5G, nG, NFC ou technologie sans fil similaire.

11. Système de positionnement et de suivi en cours d'utilisation selon l'une quelconque des revendications précédentes, dans lequel l'identification est un numéro ou une étiquette unique pour le dispositif de détection spécifique de sorte que celui-ci puisse être identifié dans l'interface utilisateur.

12. Système de positionnement et de suivi en cours d'utilisation selon l'une quelconque des revendications précédentes, dans lequel l'unité d'alimentation est un bloc-batterie.

13. Procédé d'identification de la position et de l'état d'un élément mobile ou d'une installation ou d'une facilité dans un système de positionnement et de suivi en cours d'utilisation selon l'une quelconque des revendications précédentes, comprenant les étapes consistant à
- détecter une position d'un dispositif détecteur ayant une identification,
- détecter une distance et/ou une charge d'un objet par rapport à l'élément mobile ou à l'installation,
- communiquer l'identification, la position et la distance et/ou la charge à un dispositif de stockage à des intervalles prédéterminés,
- stocker des données d'identification, de position et de distance et/ou de charge,
- déterminer sur la base de données la position du dispositif détecteur et si l'objet mobile ou l'installation est en cours d'utilisation.

14. Procédé selon la revendication 13, comprenant en outre la mise à disposition des données au moyen d'une interface utilisateur de sorte qu'un élément mobile, une installation ou une facilité soit suivi en temps réel via le dispositif de détection.
